# EUROPÄISCHE PATENTSCHRIFT

(11) **EP 3 124 294 B1**
(45) Veröffentlichungstag und Bekanntmachung des Hinweises auf die Patenterteilung: **11.09.2019**
(21) Anmeldenummer: 16175459.3
(22) Anmeldetag: 21.06.2016
(51) Int. Cl.: B60D 5/00, B61D 17/20

(54) **ABDECKEINRICHTUNG ZUM ABDECKEN EINES FUSSBODENSPALTS SOWIE FAHRZEUG MIT EINER SOLCHEN ABDECKEINRICHTUNG**
COVERING DEVICE FOR COVERING A FLOOR GAP, AS WELL AS A VEHICLE HAVING SUCH A COVERING DEVICE
DISPOSITIF DE RECOUVREMENT POUR LE RECOUVREMENT D'UN INTERSTICE DE PLANCHER ET VÉHICULE AVEC UN TEL DISPOSITIF DE RECOUVREMENT

(30) Priorität: 30.07.2015 DE 102015214475
(43) Veröffentlichungstag der Anmeldung: 01.02.2017
(73) Patentinhaber: Siemens Mobility GmbH, 81739 München (DE)
(72) Erfinder: Szatrowski, Leszek, 47441 Moers (DE)

(56) Entgegenhaltungen:
- EP-A1- 1 564 101
- EP-A1- 1 854 691
- EP-A1- 2 394 877
- DE-B3-102013 218 547
- DE-U1- 9 413 285

## Beschreibung

Die Erfindung bezieht sich auf eine Kombination aus zwei miteinander gekoppelten Wagen und einer Abdeckeinrichtung zum Abdecken eines Fußbodenspaltes zwischen den zwei miteinander gekoppelten Wagen nach dem Oberbegriff von Anspruch 1. Eine solche Kombination ist beispielsweise aus der EP 2 394 877 A1 bekannt. Zudem zeigen die DE 94 13 285 U1 und die EP 1 854 691 A1 weitere Ausführungsformen für Vorrichtungen zum Abdecken eines Fußbodenspaltes zwischen einander benachbarten Wagen.

Derartige Abdeckeinrichtungen werden bei Schienenfahrzeugen, insbesondere Eisenbahnzügen, eingesetzt, um Fahrzeuginsassen einen gefahrlosen Übergang zwischen den gekoppelten Wagen zu ermöglichen.

Der Erfindung liegt die Aufgabe zugrunde, eine Abdeckeinrichtung anzugeben, die sich einfach und kostengünstig herstellen lässt sowie eine sichere Abdeckung eines Fußbodenspaltes bei minimalem Stolperrisiko gewährleistet.

Diese Aufgabe wird erfindungsgemäß durch eine Kombination aus zwei miteinander gekoppelten Wagen und einer Abdeckeinrichtung mit den Merkmalen gemäß Patentanspruch 1 gelöst. Vorteilhafte Ausgestaltungen der erfindungsgemäßen Kombination sind in Unteransprüchen angegeben. Danach ist erfindungsgemäß vorgesehen, dass die Drehplatte um eine vertikale Plattendrehachse drehbar ist und die vertikale Plattendrehachse durch die Drehachse verläuft, um die sich die zwei Wagen relativ zueinander drehen können.

Ein wesentlicher Vorteil der erfindungsgemäßen Abdeckeinrichtung ist darin zu sehen, dass die Drehplatte, die auf dem zweiten Wagen aufliegt, aufgrund ihrer eignen Drehbarkeit unabhängig von dem jeweiligen Drehwinkel zwischen den zwei Wagen eine sichere Abdeckung des Fußbodenspalts bewirken kann. Bezüglich der Anordnung der Plattendrehachse ist es vorgesehen, dass die Drehplatte um eine vertikale Plattendrehachse drehbar ist und die vertikale Plattendrehachse durch die Drehachse verläuft, um die sich die zwei Wagen relativ zueinander drehen können. Eine solche Anordnung der Plattendrehachse ermöglicht eine optimale Ausrichtung der Grund- und Drehplatte relativ zueinander auch bei Kippbewegungen (Schwenken, Nicken und/oder Wanken) der Wagen relativ zueinander.

Die Drehplatte ist vorzugsweise kreissektorförmig. Im Falle einer solchen Ausgestaltung ist es besonders vorteilhaft, wenn die vertikale Plattendrehachse durch den Mittelpunkt des den Kreissektor bildenden Kreises verläuft.

Vorzugsweise liegt der Kreissektorwinkel des Kreissektors in einem Bereich zwischen 100 und 200 Grad, besonders bevorzugt in einem Bereich zwischen 135 und 180 Grad.

Um eine zuverlässige Kopplung zwischen Grundplatte und Drehplatte zu gewährleisten, wird es als vorteilhaft angesehen, wenn in Wagenlängsrichtung gesehen auf der linken Wagenseite ein Abstandshalter vorhanden ist, der auf der Unterseite der Grundplatte angeordnet ist, insbesondere in Richtung der Drehplatte unter der Grundplatte herausragt, und nachfolgend linker grundplattenseitiger Abstandshalter genannt wird, in Wagenlängsrichtung gesehen auf der linken Wagenseite ein Abstandshalter vorhanden ist, der auf der Unterseite der Drehplatte angeordnet ist, insbesondere in Richtung des linken grundplattenseitigen Abstandshalters unter der Drehplatte herausragt, und nachfolgend linker drehplattenseitiger Abstandshalter genannt wird, und der linke grundplattenseitige Abstandshalter und der linke drehplattenseitige Abstandshalter derart zueinander ausgerichtet sind, dass bei einer Drehbewegung des ersten und zweiten Wagens relativ zueinander die beiden Abstandshalter aufeinander stoßen und eine Drehung der Drehplatte relativ zum zweiten Wagen hervorrufen.

In entsprechender Weise ist es auch vorteilhaft, wenn in Wagenlängsrichtung gesehen auf der rechten Wagenseite ein Abstandshalter vorhanden ist, der auf der Unterseite der Grundplatte angeordnet ist, insbesondere in Richtung der Drehplatte unter der Grundplatte herausragt, und nachfolgend rechter grundplattenseitiger Abstandshalter genannt wird, in Wagenlängsrichtung gesehen auf der rechten Wagenseite ein Abstandshalter vorhanden ist, der auf der Unterseite der Drehplatte angeordnet ist, insbesondere in Richtung des rechten grundplattenseitigen Abstandshalters unter der Drehplatte herausragt, und nachfolgend rechter drehplattenseitiger Abstandshalter genannt wird, und der rechte grundplattenseitige Abstandshalter und der rechte drehplattenseitige Abstandshalter derart zueinander ausgerichtet sind, dass bei einer Drehbewegung des ersten und zweiten Wagens relativ zueinander die beiden Abstandshalter aufeinander stoßen und eine Drehung der Drehplatte relativ zum zweiten Wagen hervorrufen.

Um zu gewährleisten, dass auch im Falle einer Kippbewegung zwischen der Grundplatte und der Drehplatte keine oder zumindest keine signifikante Stolperstelle im Bereich der Abdeckeinrichtung entsteht, wird es als vorteilhaft angesehen, wenn an einer dem zweiten Wagen zugewandten ersten Stirnfläche der Grundplatte eine erste Schwenkachse ausgebildet ist, um die eine erste Teilplatte der Abdeckeinrichtung schwenkbar an der Grundplatte gelagert ist, an einer dem zweiten Wagen zugewandten zweiten Stirnfläche der Grundplatte eine zweite Schwenkachse ausgebildet ist, um die eine zweite Teilplatte der Abdeckeinrichtung schwenkbar an der Grundplatte gelagert ist, und die Drehplatte für jede der zwei Teilplatten jeweils mindestens einen Gleithalter aufweist, auf dem sich die jeweilige Teilplatte abstützt.

Eine stets optimale Auslenkung der beiden Teilplatten relativ zur Drehplatte lässt sich erreichen, wenn ein erster der genannten Gleithalter auf der Unterseite der Drehplatte angeordnet ist und sich ausgehend von der der ersten Teilplatte zugewandten Kreissektorkante der Drehplatte in Richtung auf den ersten Wagen wegerstreckt und eine Auflage für die schwenkbare erste Teilplatte bildet und ein zweiter der genannten Gleithalter auf der Unterseite der Drehplatte angeordnet ist und sich ausgehend von der der zweiten Teilplatte zugewandten anderen Kreissektorkante der Drehplatte in Richtung auf den ersten Wagen wegerstreckt und eine Auflage für die schwenkbare zweite Teilplatte bildet.

Vorzugsweise sind die erste Teilplatte und die zweite Teilplatte jeweils dreieckförmig.

Im Falle einer dreieckförmigen Ausgestaltung der beiden Teilplatten wird es als besonders vorteilhaft angesehen, wenn die erste Teilplatte und die zweite Teilplatte jeweils derart ausgerichtet sind, dass eine Ecke im Bereich der Plattendrehachse liegt, und die dieser Ecke gegenüberliegende Dreiecksseite jeweils eine äußere Kante bildet, die fluchtend zwischen einer radial außen liegenden Ecke der Drehplatte und der gegenüberliegenden Ecke der Grundplatte liegt.

Die Grundplatte ist an dem ersten Wagen vorzugsweise starr angebracht.

Um ein reibungsarmes Gleiten der Drehplatte auf dem zweiten Wagen zu gewährleisten, wird es als vorteilhaft angesehen, wenn die Abdeckeinrichtung eine Gleiteinrichtung umfasst, die an dem zweiten Wagen angebracht ist und auf der die Drehplatte schwerkraftbedingt aufliegt oder die an der Unterseite der Drehplatte angebracht ist.

Die Erfindung bezieht sich darüber hinaus auf ein Fahrzeug, insbesondere Schienenfahrzeug, mit zumindest zwei miteinander gekoppelten Wagen, die relativ zueinander verdrehbar sind, und einer Abdeckeinrichtung zum Abdecken eines Fußbodenspaltes zwischen den zwei miteinander gekoppelten Wagen. Erfindungsgemäß ist bezüglich eines solchen Fahrzeugs vorgesehen, dass die Abdeckeinrichtung so ausgestaltet ist, wie dies oben im Einzelnen erläutert worden ist.

Besonders vorteilhaft ist es, wenn die zwei Wagen mittels eines Gelenks gekoppelt sind und die vertikale Plattendrehachse, um die sich die drehbare Drehplatte dreht, - fiktiv verlängert - durch das Gelenk verläuft.

Die Erfindung wird nachfolgend anhand von Ausführungsbeispielen näher erläutert; dabei zeigen beispielhaft
- Figur 1: ein Ausführungsbeispiel für eine erfindungsgemäße Abdeckeinrichtung, die zum Abdecken eines Fußbodenspalts zwischen zwei miteinander gekoppelten Wagen einsetzbar ist, und
- Figur 2: die Unterseite der Abdeckeinrichtung gemäß Figur 1 in einer dreidimensionalen Darstellung zur Visualisierung in der Figur 1 verdeckter Komponenten.

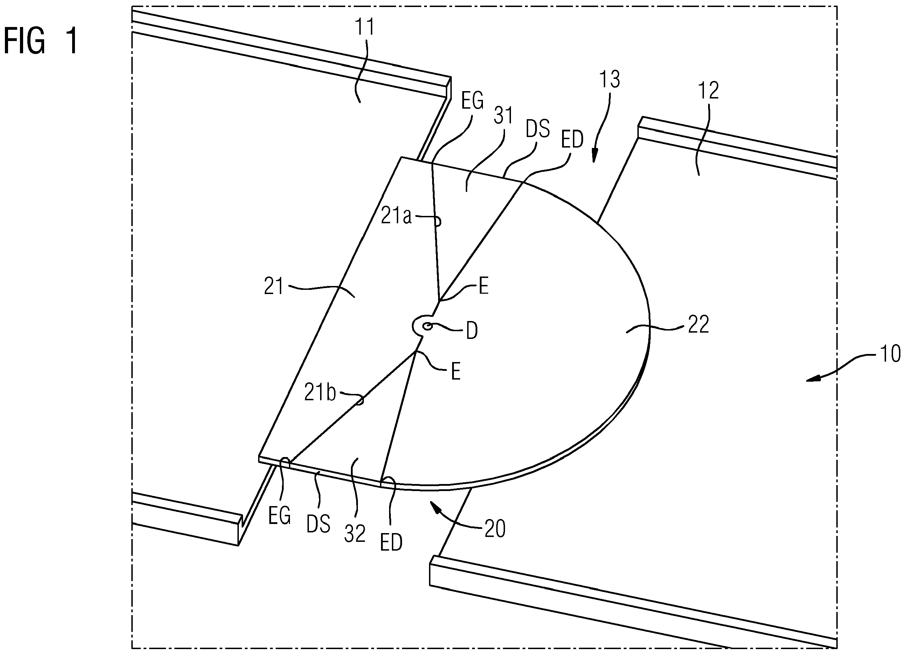

Die Figur 1 zeigt zwei miteinander gekoppelte Wagen eines mehrgliedrigen Schienenfahrzeugs 10, bei dem es sich beispielsweise um einen Eisenbahnzug handeln kann. Der in der Figur 1 linke Wagen ist mit dem Bezugszeichen 11 gekennzeichnet und wird nachfolgend als erster Wagen bezeichnet; der in der Figur 1 rechte Wagen des Schienenfahrzeugs 10 trägt das Bezugszeichen 12 und wird nachfolgend als zweiter Wagen bezeichnet. Je nach Fahrtrichtung des Schienenfahrzeugs 10 kann der erste Wagen 11 den gegenüber dem zweiten Wagen 12 - in Fahrtrichtung gesehen - vorderen Wagen oder den hinteren Wagen bilden.

Um eine Drehbarkeit der beiden Wagen 11 und 12 relativ zueinander zu gewährleisten, weisen diese einen Abstand zueinander auf, durch den im Fußbodenbereich ein Fußbodenspalt 13 zwischen den beiden Wagen 11 und 12 entsteht. Der Fußbodenspalt 13 wird durch eine Abdeckeinrichtung 20 abgedeckt, um ein gefahrlosen Passieren des Fußbodenspalts 13 durch Fahrzeuginsassen zu ermöglichen.

Die Abdeckeinrichtung 20 weist eine Grundplatte 21, eine Drehplatte 22, eine erste Teilplatte 31 sowie eine zweite Teilplatte 32 auf, die jeweils einen zugeordneten, vom jeweiligen Drehwinkel zwischen den Wagen 11 und 12 abhängigen, Abschnitt des Fußbodenspalts 13 abdecken.

Die Grundplatte 21 ist vorzugsweise starr am ersten Wagen 11 angebracht. An einer dem zweiten Wagen 12 zugewandten ersten Stirnfläche (bzw. Stirnkante) 21a der Grundplatte 21 ist eine erste Schwenkachse ausgebildet, um die die erste Teilplatte 31 der Abdeckeinrichtung 20 gegenüber der Grundplatte 21 schwenkbar ist; die erste Schwenkachse liegt parallel zur Stirnfläche (bzw. Stirnkante) 21a der Grundplatte 21 und bevorzugt horizontal.

An einer dem zweiten Wagen zugewandten zweiten Stirnfläche 21b (bzw. Stirnkante) der Grundplatte 21 ist eine zweite Schwenkachse ausgebildet, um die die zweite Teilplatte 32 schwenkbar an der Grundplatte 21 gelagert ist; diese zweite Schwenkachse liegt parallel zur Stirnfläche (bzw. Stirnkante) 21b der Grundplatte 21 und bevorzugt horizontal.

Die beiden Teilplatten 31 und 32 sind somit jeweils gegenüber der Grundplatte 21 verschwenkbar.

Um eine definierte Position der beiden Teilplatten 31 und 32 zu gewährleisten, weist die Drehplatte 22 Gleithalter auf, die auf der Unterseite der Drehplatte 22 angeordnet sind und aus diesem Grunde in der Figur 1 nicht erkennbar sind. Die Gleithalter ragen unter der Unterseite der Drehplatte 22 hervor und erlauben es der ersten Teilplatte 31 und der zweiten Teilplatte 32, sich auf dem oder den jeweils zugeordneten Gleithaltern abzustützen.

Die Drehplatte 22 ist um eine Plattendrehachse D drehbar, die vertikal angeordnet ist und vorzugsweise durch diejenige Drehachse verläuft, um die sich die zwei Wagen 11 und 12 relativ zueinander drehen können. Wird die Drehachse zwischen den beiden Wagen 11 und 12 durch ein Gelenk gebildet, so verläuft die Plattendrehachse D der Drehplatte 22 vorzugsweise durch dieses Gelenk.

Die Funktion der beiden Teilplatten 31 und 32 besteht anschaulich beschrieben darin, einen Kippwinkel zwischen der Drehplatte 22 und der Grundplatte 21 auszugleichen und einen vertikalen Spalt, der eine Stolperstelle bilden könnte, zwischen der Grundplatte 21 und der Drehplatte 22 zu vermeiden bzw. zu überbrücken.

Die Figur 1 zeigt außerdem, dass die erste Teilplatte 31 und die zweite Teilplatte 32 jeweils derart ausgerichtet sind, dass eine Ecke E im Bereich der Plattendrehachse D liegt. Die dieser Ecke E gegenüberliegende Dreiecksseite DS bildet jeweils eine äußere Kante, die fluchtend zwischen einer radial außen liegenden Ecke ED der Drehplatte 22 und der gegenüberliegenden Ecke EG der Grundplatte 21 liegt. Die radial außen liegenden Ecken ED der Drehplatte 22 werden durch die Enden der jeweiligen Kreissektorkante der kreissektorförmigen Drehplatte 22 gebildet.

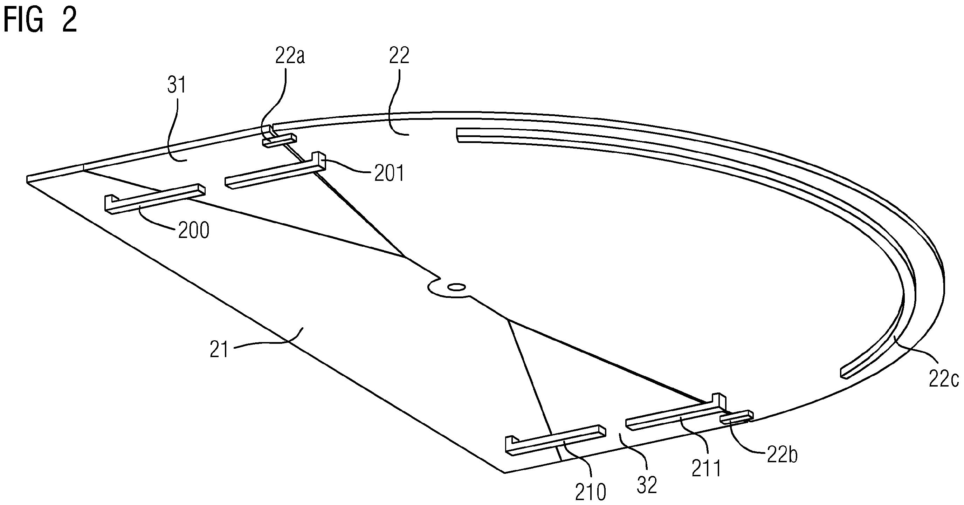

Die Figur 2 zeigt die Unterseite der Abdeckeinrichtung 20 gemäß Figur 1. Man erkennt die Drehplatte 22 sowie die bereits im Zusammenhang mit der Figur 1 erwähnten Gleithalter, die zum Abstützen der Teilplatten 31 und 32 dienen; die Gleithalter sind in der Figur 2 mit dem Bezugszeichen 22a und 22b gekennzeichnet. Der Gleithalter 22a dient dabei zum Abstützen der ersten Teilplatte 31 und der Gleithalter 22b zum Abstützen der zweiten Teilplatte 32.

Die Figur 2 lässt darüber hinaus eine Gleiteinrichtung 22c erkennen, die vorzugsweise unmittelbar an der Drehplatte 22 angebracht ist und schwerkraftbedingt auf dem zweiten Wagen 12 aufliegt. Die Funktion der Gleiteinrichtung 22c besteht darin, ein Verdrehen der Drehplatte 22 auf der Auflagefläche auf dem zweiten Wagen 12 möglichst reibungsarm zu ermöglichen. Alternativ kann die Gleiteinrichtung 22c auch auf dem zweiten Wagen 12 angeordnet bzw. angebracht sein. In diesem Fall liegt die Drehplatte 22 schwerkraftbedingt auf der wagenseitig angebrachten Gleiteinrichtung auf.

Die Figur 2 lässt außerdem erkennen, dass in Wagenlängsrichtung gesehen auf der linken Wagenseite, die der linken Seite in der Figur 2 entspricht, ein Abstandshalter vorhanden ist, der auf der Unterseite der Grundplatte 21 angeordnet ist, und nachfolgend linker grundplattenseitiger Abstandshalter 200 genannt wird. Der linke grundplattenseitige Abstandshalter 200 erstreckt sich von der Unterseite der Grundplatte 21 aus in Richtung der Drehplatte 22 und damit in den Bereich unterhalb der ersten Teilplatte 31.

Ebenfalls auf der linken Wagenseite bzw. der linken Seite in Figur 2 befindet sich ein linker drehplattenseitiger Abstandshalter 201, der auf der Unterseite der Drehplatte 22 angeordnet ist und sich in Richtung der Grundplatte 21 erstreckt. Der linke drehplattenseitige Abstandshalter 201 erstreckt sich ebenfalls in den Bereich unterhalb der Teilplatte 31.

Die Funktion der beiden Abstandshalter 200 und 201 besteht darin, bei einer Drehung der Grundplatte 21 im Uhrzeigersinn eine entsprechende Drehung der Drehplatte 22 im Uhrzeigersinn hervorzurufen: Wird nämlich die Grundplatte 21 bei der Darstellung gemäß Figur 2 im Uhrzeigersinn gedreht, so wird der linke grundplattenseitige Abstandshalter 200 auf den linken drehplattenseitigen Abstandshalter 201 stoßen und somit eine Drehbewegung der Drehplatte 22 bewirken. Entsprechendes gilt im Falle einer Drehung der Drehplatte 22 entgegen dem Uhrzeigersinn.

In entsprechender Weise sind auf der rechten Wagenseite ein grundplattenseitiger und ein drehplattenseitiger Abstandshalter 210 und 211 vorgesehen:
Der rechte grundplattenseitige Abstandshalter 210 ist auf der Unterseite der Grundplatte 21 angeordnet und erstreckt sich von dort in Richtung auf die Drehplatte 22 bis in den Bereich unterhalb der Teilplatte 32.

Der rechte drehplattenseitige Abstandshalter 211 ist auf der Unterseite der Drehplatte 22 angeordnet und erstreckt sich von dort in Richtung zur Grundplatte 21 bis in den Bereich unterhalb der Teilplatte 32, in den sich - wie erwähnt - auch der rechte grundplattenseitige Abstandshalter 210 hinein erstreckt.

Kommt es nun beispielsweise zu einer Drehung der Grundplatte 21 entgegen dem Uhrzeigersinn, so wird der rechte grundplattenseitige Abstandshalter 210 auf den rechten drehplattenseitigen Abstandshalter 211 stoßen und damit eine Drehbewegung der Drehplatte 22 hervorrufen. Entsprechendes gilt umgekehrt bei einer Drehung der Drehplatte 22 im Uhrzeigersinn.

Im Falle einer Kippbewegung der Drehplatte 22 relativ zur Grundplatte 21 wird durch ein Mitschwenken bzw. Mitverkippen der beiden Teilplatten 31 und 32 sichergestellt, dass es zu keiner vertikalen Spaltbildung im Bereich der Abdeckeinrichtung 20 und somit zu keiner Stolperkante im Bereich der Abdeckeinrichtung 20 kommen kann.

Bei den Ausführungsbeispielen gemäß den Figuren 1 und 2 kann folgenden Wagenbewegungen relativ zueinander durch die beschriebenen Merkmale in vorteilhafter Weise Rechnung getragen werden:
- Wanken zwischen den beiden Wagen 11 und 12,
- Überlagerung von Schwenken und Nicken im Gelenk, das die beiden Wagen 11 und 12 verbindet,
- Überlagerung von Schwenken, und Wanken im Gelenk und
- Überlagerung von Schwenken, Nicken und Wanken im Gelenk. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, solange der resultierende Gegenstand zum Schutzumfang gehört, der durch die Patentansprüche definiert ist.

## Patentansprüche

1. Kombination aus zwei miteinander gekoppelten Wagen (11,12) und einer Abdeckeinrichtung (20) zum Abdecken eines Fußbodenspaltes (13) zwischen den zwei miteinander gekoppelten Wagen (11, 12), die relativ zueinander verdrehbar sind, wobei mit einem der Wagen, nachfolgend erster Wagen (11) genannt, eine Grundplatte (21) der Abdeckeinrichtung (20) verbunden ist, die in Fahrzeuglängsrichtung in Richtung auf den zweiten Wagen (12) ragt und einen Abschnitt des Fußbodenspaltes (13) abdeckt, und
- eine Drehplatte (22), die auf dem anderen der zwei Wagen, nachfolgend zweiter Wagen (12) genannt, aufliegt und sich - im Falle einer Relativdrehung der zwei Wagen (11, 12) - gegenüber dem zweiten Wagen (12) verdreht,
- **dadurch gekennzeichnet, dass** die Drehplatte (22) um eine vertikale Plattendrehachse (D) drehbar ist und
- die vertikale Plattendrehachse (D) durch die Drehachse verläuft, um die sich die zwei Wagen (11, 12) relativ zueinander drehen können, sodass auch bei Kippbewegungen der Wagen (11, 12) relativ zueinander die Grundplatte (21) und die Drehplatte (22) relativ zueinander ausgerichtet sind.

2. Kombination nach Anspruch 1,
**dadurch gekennzeichnet, dass**
die Drehplatte (22) kreissektorförmig ist und die vertikale Plattendrehachse (D) durch den Mittelpunkt des den Kreissektor bildenden Kreises verläuft.

3. Kombination nach Anspruch 2,
**dadurch gekennzeichnet, dass**
der Kreissektorwinkel des Kreissektors in einem Bereich zwischen 100 und 200 Grad, besonders bevorzugt in einem Bereich zwischen 135 und 180 Grad, liegt.

4. Kombination nach einem der voranstehenden Ansprüche, **dadurch gekennzeichnet, dass**
- in Wagenlängsrichtung gesehen auf der linken Wagenseite ein Abstandshalter vorhanden ist, der auf der Unterseite der Grundplatte (21) angeordnet ist, insbesondere in Richtung der Drehplatte (22) unter der Grundplatte (21) herausragt, und nachfolgend linker grundplattenseitiger Abstandshalter (200) genannt wird,
- in Wagenlängsrichtung gesehen auf der linken Wagenseite ein Abstandshalter vorhanden ist, der auf der Unterseite der Drehplatte (22) angeordnet ist, insbesondere in Richtung des linken grundplattenseitigen Abstandshalters (200) unter der Drehplatte (22) herausragt, und nachfolgend linker drehplattenseitiger Abstandshalter (201) genannt wird, und
- der linke grundplattenseitige Abstandshalter (200) und der linke drehplattenseitige Abstandshalter (201) derart zueinander ausgerichtet sind, dass bei einer Drehbewegung des ersten und zweiten Wagens (11, 12) relativ zueinander die beiden Abstandshalter (200, 201) aufeinander stoßen und eine Drehung der Drehplatte (22) hervorrufen.

5. Kombination nach einem der voranstehenden Ansprüche, **dadurch gekennzeichnet, dass**
- in Wagenlängsrichtung gesehen auf der rechten Wagenseite ein Abstandshalter vorhanden ist, der auf der Unterseite der Grundplatte (21) angeordnet ist, insbesondere in Richtung der Drehplatte (22) unter der Grundplatte (21) herausragt, und nachfolgend rechter grundplattenseitiger Abstandshalter (210) genannt wird,
- in Wagenlängsrichtung gesehen auf der rechten Wagenseite ein Abstandshalter vorhanden ist, der auf der Unterseite der Drehplatte (22) angeordnet ist, insbesondere in Richtung des rechten grundplattenseitigen Abstandshalters (210) unter der Drehplatte (22) herausragt, und nachfolgend rechter drehplattenseitiger Abstandshalter (211) genannt wird, und
- der rechte grundplattenseitige Abstandshalter (210) und der rechte drehplattenseitige Abstandshalter (211) derart zueinander ausgerichtet sind, dass bei einer Drehbewegung des ersten und zweiten Wagens (11, 12) relativ zueinander die beiden Abstandshalter (210, 211) aufeinander stoßen und eine Drehung der Drehplatte (22) hervorrufen.

6. Kombination nach einem der voranstehenden Ansprüche, **dadurch gekennzeichnet, dass**
- an einer dem zweiten Wagen (12) zugewandten ersten Stirnfläche (21a) der Grundplatte (21) eine erste Schwenkachse ausgebildet ist, um die eine erste Teilplatte (31) der Abdeckeinrichtung (20) schwenkbar an der Grundplatte (21) gelagert ist,
- an einer dem zweiten Wagen (12) zugewandten zweiten Stirnfläche (21b) der Grundplatte (21) eine zweite Schwenkachse ausgebildet ist, um die eine zweite Teilplatte (32) der Abdeckeinrichtung (20) schwenkbar an der Grundplatte (21) gelagert ist, und
- die Drehplatte (22) für jede der zwei Teilplatten (31, 32) jeweils mindestens einen Gleithalter (22a, 22b) aufweist, auf dem sich die jeweilige Teilplatte (31, 32) abstützt.

7. Kombination nach den Ansprüchen 3 und 6 ,
**dadurch gekennzeichnet, dass**
- ein erster der genannten Gleithalter (22a) auf der Unterseite der Drehplatte (22) angeordnet ist und sich ausgehend von der der ersten Teilplatte (31) zugewandten Kreissektorkante der Drehplatte (22) in Richtung auf den ersten Wagen (11) wegerstreckt und eine Auflage für die schwenkbare erste Teilplatte (31) bildet und
- ein zweiter der genannten Gleithalter (22b) auf der Unterseite der Drehplatte (22) angeordnet ist und sich ausgehend von der der zweiten Teilplatte (32) zugewandten anderen Kreissektorkante der Drehplatte (22) in Richtung auf den ersten Wagen (11) wegerstreckt und eine Auflage für die schwenkbare zweite Teilplatte (32) bildet.

8. Kombination nach den Ansprüchen 6 oder 7,
**dadurch gekennzeichnet, dass**
die erste Teilplatte (31) und die zweite Teilplatte (32) jeweils dreieckförmig sind.

9. Kombination nach Anspruch 8,
**dadurch gekennzeichnet, dass**
- die erste Teilplatte (31) und die zweite Teilplatte (32) jeweils derart ausgerichtet sind, dass eine Ecke im Bereich der Plattendrehachse (D) liegt, und
- die dieser Ecke gegenüberliegende Dreiecksseite jeweils eine äußere Kante bildet, die fluchtend zwischen einer radial außen liegenden Ecke der Drehplatte (22) und der gegenüberliegenden Ecke der Grundplatte (21) liegt.

10. Kombination nach einem der voranstehenden Ansprüche,
**dadurch gekennzeichnet, dass**
die Grundplatte (21) an dem ersten Wagen (11) starr angebracht ist.

11. Kombination nach einem der voranstehenden Ansprüche,
**dadurch gekennzeichnet, dass**
die Abdeckeinrichtung (20) eine Gleiteinrichtung (22c) umfasst, die an dem zweiten Wagen (12) angebracht ist und auf der die Drehplatte (22) schwerkraftbedingt aufliegt oder die an der Unterseite der Drehplatte (22) angebracht ist.

12. Fahrzeug, insbesondere Schienenfahrzeug (10), mit
- zumindest zwei miteinander gekoppelten Wagen (11, 12), die relativ zueinander verdrehbar sind, und
- einer Abdeckeinrichtung (20) zum Abdecken eines Fußbodenspaltes (13) zwischen den zwei miteinander gekoppelten Wagen (11, 12),
**dadurch gekennzeichnet, dass**
die Kombination aus den zwei miteinander gekoppelten Wagen (11, 12) und der Abdeckeinrichtung (20) die Merkmale gemäß einem der voranstehenden Ansprüche aufweist.

13. Fahrzeug nach Anspruch 12,
**dadurch gekennzeichnet, dass**
- die zwei Wagen (11, 12) mittels eines Gelenks gekoppelt sind und
- die vertikale Plattendrehachse (D), um die sich die drehbare Drehplatte (22) dreht, - fiktiv verlängert - durch das Gelenk verläuft.

## Claims

1. Combination of two coupled-together carriages (11, 12) and of a covering device (20) for covering a floor gap (13) between the two coupled-together carriages (11, 12), which are rotatable relative to one another, wherein a baseplate (21) of the covering device (20) is connected to one of the carriages, referred to below as first carriage (11), which baseplate projects, in the vehicle longitudinal direction, in the direction of the second carriage (12) and covers a portion of the floor gap (13), and
- a rotary plate (22) which rests on the other of the two carriages, referred to below as second carriage (12), and - in the event of a relative rotation of the two carriages (11, 12) - rotates with respect to the second carriage (12),
- **characterized in that** the rotary plate (22) is rotatable about a vertical plate axis of rotation (D), and
- the vertical plate axis of rotation (D) extends through an axis of rotation about which the two carriages (11, 12) can rotate relative to one another, with the result that, even during pivoting movements of the carriages (11, 12) relative to one another, the baseplate (21) and the rotary plate (22) are oriented relative to one another.

2. Combination according to Claim 1,
**characterized in that**
the rotary plate (22) is circular sector-shaped and the vertical plate axis of rotation (D) extends through the centre point of the circle forming the circular sector.

3. Combination according to Claim 2,
**characterized in that**
the circular sector angle of the circular sector lies in a range between 100 and 200 degrees, particularly preferably in a range between 135 and 180 degrees.

4. Combination according to one of the preceding claims, **characterized in that**
- as viewed in the carriage longitudinal direction, a spacer is present on the left carriage side and is arranged on the underside of the baseplate (21), in particular projecting in the direction of the rotary plate (22) below the baseplate (21), said spacer being referred to below as left baseplate-side spacer (200),
- as viewed in the carriage longitudinal direction, a spacer is present on the left carriage side and is arranged on the underside of the rotary plate (22), in particular projecting in the direction of the left baseplate-side spacer (200) below the rotary plate (22), said spacer being referred to below as left rotary plate-side spacer (201), and
- the left baseplate-side spacer (200) and the left rotary plate-side spacer (201) are oriented with respect to one another in such a way that, upon a rotary movement of the first and second carriage (11, 12) relative to one another, the two spacers (200, 201) butt against one another and cause a rotation of the rotary plate (22).

5. Combination according to one of the preceding claims, **characterized in that**
- as viewed in the carriage longitudinal direction, a spacer is present on the right carriage side and is arranged on the underside of the baseplate (21), in particular projecting in the direction of the rotary plate (22) below the baseplate (21), said spacer being referred to below as right baseplate-side spacer (210),
- as viewed in the carriage longitudinal direction, a spacer is present on the right carriage side and is arranged on the underside of the rotary plate (22), in particular projecting in the direction of the right baseplate-side spacer (210) below the rotary plate (22), said spacer being referred to below as right rotary plate-side spacer (211), and
- the right baseplate-side spacer (210) and the right rotary plate-side spacer (211) are oriented with respect to one another in such a way that, upon a rotary movement of the first and second carriage (11, 12) relative to one another, the two spacers (210, 211) butt against one another and cause a rotation of the rotary plate (22).

6. Combination according to one of the preceding claims, **characterized in that**
- a first pivot axis is formed on a first end face (21a) of the baseplate (21) that faces the second carriage (12), about which pivot axis a first subplate (31) of the covering device (20) is pivotably mounted on the baseplate (21),
- a second pivot axis is formed on a second end face (21b) of the baseplate (21) that faces the second carriage (12), about which pivot axis a second subplate (32) of the covering device (20) is pivotably mounted on the baseplate (21), and
- the rotary plate (22) has, for each of the two subplates (31, 32), at least one respective sliding holder (22a, 22b) on which the respective subplate (31, 32) is supported.

7. Combination according to Claims 3 and 6,
**characterized in that**
- a first of said sliding holders (22a) is arranged on the underside of the rotary plate (22) and, starting from the circular sector edge of the rotary plate (22) that faces the first subplate (31), extends away in the direction of the first carriage (11) and forms a support for the pivotable first subplate (31), and
- a second of said sliding holders (22b) is arranged on the underside of the rotary plate (22) and, starting from the other circular sector edge of the rotary plate (22) that faces the second subplate (32), extends away in the direction of the first carriage (11) and forms a support for the pivotable second subplate (32).

8. Combination according to either of Claims 6 and 7,
**characterized in that**
the first subplate (31) and the second subplate (32) are each triangular.

9. Combination according to Claim 8,
**characterized in that**
- the first subplate (31) and the second subplate (32) are each oriented in such a way that a corner is situated in the region of the plate axis of rotation (D), and
- the triangle side opposite to this corner in each case forms an outer edge which is situated in alignment between a radially outer corner of the rotary plate (22) and the opposite corner of the baseplate (21).

10. Combination according to one of the preceding claims,
**characterized in that**
the baseplate (21) is rigidly mounted on the first carriage (11) .

11. Combination according to one of the preceding claims,
**characterized in that**
the covering device (20) comprises a sliding device (22c) which is mounted on the second carriage (12) and on which the rotary plate (22) rests by virtue of gravitational force or which is mounted on the underside of the rotary plate (22).

12. Vehicle, in particular a rail vehicle (10), having
- at least two coupled-together carriages (11, 12) which are rotatable relative to one another, and
- a covering device (20) for covering a floor gap (13) between the two coupled-together carriages (11, 12),
**characterized in that**
the combination of the two coupled-together carriages (11, 12) and the covering device (20) has the features according to one of the preceding claims.

13. Vehicle according to Claim 12,
**characterized in that**
- the two carriages (11, 12) are coupled by means of an articulation, and
- the vertical plate axis of rotation (D) about which the rotatable rotary plate (22) rotates extends - with imaginary lengthening - through the articulation.

## Revendications

1. Combinaison de deux wagons (11, 12) attelés l'un à l'autre et d'un dispositif (20) de recouvrement pour recouvrir un interstice (13) de plancher entre les deux wagons (11, 12) attelés l'un à l'autre, qui peuvent tourner l'un par rapport à l'autre, dans lequel à l'un des wagons, dénommé dans ce qui suit premier wagon (11), est relié un plateau (21) de base du dispositif (20) de recouvrement, qui dépasse dans la direction longitudinale du véhicule en direction du deuxième wagon (12) et recouvre une partie de l'interstice (13) de plancher, et
- un plateau (22) tournant, qui est posé sur l'autre des deux wagons, dénommé dans ce qui suit deuxième wagon (12) et qui,
- dans le cas d'une rotation relative des deux wagons (11, 12) - subit une rotation par rapport au deuxième wagon (12),
- **caractérisée en ce que** la plateau (22) tournant peut tourner autour d'un axe (D) de rotation verticale et
- l'axe (D) de rotation verticale du plateau passe par l'axe de rotation autour duquel les deux wagons (11, 12) peuvent tourner l'un par rapport à l'autre, de sorte que, même s'il se produit des mouvements de basculement des wagons (11, 12) l'un par rapport à l'autre, le plateau (21) de base et le plateau (22) tournant sont orientés l'un par rapport à l'autre.

2. Combinaison suivant la revendication 1,
**caractérisée en ce que**
le plateau (22) tournant a la forme d'un secteur de cercle et l'axe (D) de rotation verticale du plateau passe par le centre du cercle formant le secteur de cercle.

3. Combinaison suivant la revendication 2,
**caractérisée en ce que**
l'angle du secteur de cercle est dans une plage comprise entre 100 et 200 degrés, d'une manière particulièrement préférée dans une plage comprise entre 135 et 180 degrés.

4. Combinaison suivant l'une des revendications précédentes,
**caractérisée en ce que**
- considéré dans la direction longitudinale du wagon, il y a, du côté gauche du wagon, une entretoise, qui est disposée sur la face inférieure du plateau (21) de base, en dépassant notamment dans la direction du plateau (22) tournant sous le plateau (21) de base et qui est dénommée dans ce qui suit entretoise (200) gauche du côté du plateau de base,
- considéré dans la direction longitudinale du wagon, il y a, du côté gauche du wagon, une entretoise, qui est disposée sur la face inférieure du plateau (22) tournant, en dépassant notamment en direction de l'entretoise (200) gauche du côté du plateau de base sous le plateau (22) tournant et qui est dénommée dans ce qui suit entretoise (201) gauche du côté du plateau tournant, et
- l'entretoise (200) gauche du côté du plateau de base et l'entretoise (201) gauche du côté du plateau tournant sont orientées l'une par rapport à l'autre, de manière à ce que, s'il se produit un mouvement de rotation du premier et du deuxième wagons (11, 12) l'un par rapport à l'autre, les deux entretoises (200, 201) se heurtent et provoquent une rotation du plateau (22) tournant.

5. Combinaison suivant l'une des revendications précédentes, **caractérisée en ce que**
- considéré dans la direction longitudinale du wagon, il y a, du côté droit du wagon, une entretoise, qui est disposée sur la face inférieure du plateau (21) de base en dépassant notamment dans la direction du plateau (22) tournant sous le plateau (21) de base et qui est dénommée dans ce qui suit entretoise (210) droite du côté du plateau de base,
- considéré dans la direction longitudinale du wagon, il y a, du côté droit du wagon une entretoise qui est disposée sur la face inférieure du plateau (22) tournant en dépassant notamment en direction de l'entretoise (210) droite du côté du plateau de base sous le plateau (22) tournant et qui est dénommée dans ce qui suit entretoise (211) droite du côté du plateau tournant, et
- l'entretoise (210) droite du côté du plateau de base et l'entretoise (211) droite du côté du plateau tournant sont orientées l'une par rapport à l'autre, de manière à ce que, s'il se produit un mouvement de rotation du premier et du deuxième wagons (11, 12) l'un par rapport à l'autre, les deux entretoises (210, 211) se heurtent et provoquent une rotation du plateau (22) tournant.

6. Combinaison suivant l'une des revendications précédentes, **caractérisée en ce que**
- sur une première surface (21a) frontale, tournée vers le deuxième wagon (12), du plateau (21) de base, est constitué un premier axe de pivotement, autour duquel un premier plateau (31) partiel du dispositif (20) de recouvrement est monté pivotant sur le plateau (21) de base,
- sur une deuxième surface (21b) frontale, tournée vers le deuxième wagon (12), du plateau (21) de base, est constitué un deuxième axe de pivotement autour duquel un deuxième plateau (32) partiel du dispositif (20) de recouvrement est monté pivotant sur le plateau (21) de base, et
- le plateau (22) tournant a, pour chacun des deux plateaux (31,32) partiels, respectivement, au moins une fixation (22a, 22b) à glissement, sur laquelle s'appuie le plateau (31, 32) partiel respectif.

7. Combinaison suivant les revendications 3 et 6,
**caractérisée en ce qu'**
- une première desdites fixations (22a) glissantes est disposée sur la face inférieure du plateau (22) tournant et, en partant du bord de secteur de cercle tourné vers le premier plateau (31) partiel, du plateau (22) tournant, s'éloigne en direction du premier wagon (11) et forme un support pour le premier plateau (31) partiel pivotant et
- une deuxième desdites fixations (22a) glissantes est disposée sur la face inférieure du plateau (22) tournant et, en partant du bord de secteur de cercle tourné vers le deuxième plateau (32) partiel, du plateau (22) tournant, s'éloigne en direction du premier wagon (11) et forme un support pour le deuxième plateau (32) partiel pivotant.

8. Combinaison suivant les revendications 6 ou 7,
**caractérisée en ce que**
le premier plateau (31) partiel et le deuxième plateau (32) partiel ont chacun la forme d'un triangle.

9. Combinaison suivant la revendication 8,
**caractérisée en ce que**
- le premier plateau (31) partiel et le deuxième plateau (32) partiel sont orientés chacun de manière à ce qu'un sommet se trouve dans la région de l'axe (D) de rotation du plateau, et
- le côté du triangle opposé à ce sommet forme, respectivement, un bord extérieur, qui est en alignement entre un sommet, se trouvant vers l'extérieur radialement, du plateau (22) tournant et le sommet opposé du plateau (21) de base.

10. Combinaison suivant l'une des revendications précédentes,
**caractérisée en ce que**
le plateau (21) de base est monté rigidement sur le premier wagon (11).

11. Combinaison suivant l'une des revendications précédentes,
**caractérisée en ce que**
le dispositif (20) de recouvrement comprend un dispositif (22c) de glissement, qui est monté sur le deuxième wagon (12) et sur lequel s'applique par gravité le plateau (22) tournant ou qui est monté sur la face inférieure du plateau (22) tournant.

12. Véhicule, notamment véhicule (10) ferroviaire, comprenant
- au moins deux wagons (11, 12) attelés entre eux, qui peuvent tourner l'un par rapport à l'autre, et
- un dispositif (20) de recouvrement pour recouvrir un interstice (23) de plancher entre les deux wagons (11, 12) attelés l'un à l'autre,
**caractérisé en ce que**
la combinaison des deux wagons (11, 12) attelés l'un à l'autre et le dispositif (20) de recouvrement ont les caractéristiques de l'une des revendications précédentes.

13. Véhicule suivant la revendication 12,
**caractérisé en ce que**
- les deux wagons (11, 12) sont attelés au moyen d'une articulation et
- l'axe (D) vertical de rotation du plateau, autour duquel le plateau (22) tournant tourne, passe, en prolongement fictif, par l'articulation.
